(19) Europäisches Patentamt
European Patent Office
Office européen des brevets

(11) EP 3 752 589 B1

(12) **EUROPEAN PATENT SPECIFICATION**

(45) Date of publication and mention of the grant of the patent:
**30.08.2023 Bulletin 2023/35**

(21) Application number: **20700371.6**

(22) Date of filing: **09.01.2020**

(51) International Patent Classification (IPC):
***C11D 3/40*** *(2006.01)* ***C11D 11/00*** *(2006.01)*
***C09B 29/033*** *(2006.01)* ***C09B 31/10*** *(2006.01)*
***C09B 62/008*** *(2006.01)* ***C09B 69/00*** *(2006.01)*

(52) Cooperative Patent Classification (CPC):
**C11D 3/40; C09B 29/0033; C09B 29/0808; C09B 31/105; C09B 62/0086; C09B 69/00; C11D 11/0017**

(86) International application number:
**PCT/EP2020/050469**

(87) International publication number:
**WO 2020/151959 (30.07.2020 Gazette 2020/31)**

(54) **LAUNDRY DETERGENT**

WASCHMITTEL

DÉTERGENT POUR LESSIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2019 EP 19153077**

(43) Date of publication of application:
**23.12.2020 Bulletin 2020/52**

(73) Proprietors:
- **Unilever Global IP Limited**
  **Wirral, Merseyside CH62 4ZD (GB)**
  Designated Contracting States:
  **CY DE GB IE IT MT**
- **Unilever IP Holdings B.V.**
  **3013 AL Rotterdam (NL)**
  Designated Contracting States:
  **AL AT BE BG CH CZ DK EE ES FI FR GR HR HU IS LI LT LU LV MC MK NL NO PL PT RO RS SE SI SK SM TR**

(72) Inventors:
- **BATCHELOR, Stephen, Norman**
  **Wirral Merseyside CH63 3JW (GB)**
- **BURNHAM, Neil, Stephen**
  **Wirral Merseyside CH63 3JW (GB)**

(74) Representative: **Brooijmans, Rob Josephina Wilhelmus**
**Unilever Patent Group**
**Bronland 14**
**6708 WH Wageningen (NL)**

(56) References cited:
**WO-A1-2010/145887**
**WO-A1-2011/098356**
**WO-A1-2012/166768**
**WO-A2-2011/017719**
**JP-A- S56 143 245**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### Field of the invention

The present invention relates to a laundry detergent composition that comprises a pH stable shading dye. The invention further relates to a domestic method of treating a textile using a laundry detergent composition comprising the shading dye.

### Background of the invention

There is a need to maintain the white appearance of textiles such that the aesthetic value is retained as long as possible. Many textiles are white but over the lifetime of these textiles the whiteness fades or yellows reducing the aesthetic value of the textile. To counteract this laundry detergent manufacturers may incorporate shading dyes into their products. The purpose of the shading dye is to deposit to the fabric, and thereby typically to counteract the fading and yellowing of the textile by providing a preferably blue-violet hue to the laundered fabrics. The shading dye needs to be able to deposit from the laundry wash liquor, comprising surfactants, onto the textile during a domestic laundry process, while present in relatively low amounts.

Shading dyes comprising alkene groups provided the advantage of permitting further chemical reaction of the dye, for example by a radical addition reaction, without destroying the chromophore. WO2012/166768 (Procter and Gamble) discloses mono-azo thiophenes shading dyes covalently bound to alkoxy/alkyl-based side-chains containing alkene groups. Such dyes were found to be sensitive to hydrolysis in the pH range of 4 to 10. Alkaline conditions are typically found in laundry detergent compositions.

It is an object of the present invention to provide a laundry detergent composition comprising shading dyes that are functionalized with an alkene group with a reduced sensitivity to hydrolysis in acidic and alkaline conditions and preferably in alkaline conditions. In particular the object is to provide shading dyes functionalized with an alkene group which have a reduced sensitivity to hydrolysis in the pH range of 4 to 10 and/or which are more reactive to radical addition when compared to the dyes as disclosed in WO2012/166768.

### Summary of the invention

In a first aspect the present invention provides a laundry detergent composition comprising:

(i) from 2 to 70 wt. % of a surfactant; and
(ii) from 0.00001 to 0.1 wt. % of shading dye which is covalently bound to at least one alkoxy-$CH=CH_2$ or -$CH=CH_2$ capped polyalkoxy group.

The at least one group is covalently bound to the shading dye. A linker group may be present. If a linker group is present it is an aromatic linker group. More preferably no linker group is present. The (poly) alkoxy chain is preferably not further substituted.

Examples of alkoxy groups include those derived from butylene oxide, glycidol oxide, ethylene oxide and/or propylene oxide.

In a second aspect the present invention provides a domestic method of treating a textile, the method comprising the steps of:

a. treating a textile with an aqueous solution of 0.5 to 20 g/L, more preferably 1 to 10g/L of the laundry detergent composition according to the first aspect of the invention;
b. preferably rinsing and drying the textile.

The following benefits can be afforded by use of the shading dye according to the invention:

- Improved resistance to hydrolysis in the pH range of from 4 to 10; and/or
- Improved reactivity to radical addition; and/or
- Improved substantivity onto cellulosic and/or synthetic based textiles during a domestic wash method; and/or
- a more balanced deposition on cellulosic and one or more synthetic fibres-types such as nylon and polyester during a domestic wash method and/or on textiles based thereon.

In a third aspect the invention relates to shading dyes which are covalently bound to at least one alkoxy-$CH=CH_2$ or $-CH=CH_2$ capped polyalkoxy group as claimed.

**Detailed description of the invention**

Definitions

Weight percentage (wt. %) is based on the total weight of the laundry detergent composition, unless otherwise indicated. It will be appreciated that the total weight amount of ingredients will not exceed 100 wt. %. Whenever an amount or concentration of a component is quantified herein, unless indicated otherwise, the quantified amount or quantified concentration relates to said component per se, even though it may be common practice to add such a component in the form of a solution or of a blend with one or more other ingredients. It is furthermore to be understood that the verb "to comprise" and its conjugations is used in its non-limiting sense to mean that items following the word are included, but items not specifically mentioned are not excluded. Finally, reference to an element by the indefinite article "a" or "an" does not exclude the possibility that more than one of the elements is present, unless the context clearly requires that there be one and only one of the elements. The indefinite article "a" or "an" thus usually means "at least one". Unless otherwise specified all measurements are taken at standard conditions. Whenever a parameter, such as a concentration or a ratio, is said to be less than a certain upper limit it should be understood that in the absence of a specified lower limit the lower limit for said parameter is 0.

Dyes

Dyes are described in Industrial Dyes (K. Hunger ed, Wiley VCH 2003) and Color Chemistry (H.Zollinger, 3rd edition, Wiley VCH 2003) . Many dyes are listed in the colour index (Society of Dyers and Colourists and American Association of Textile Chemists and Colorists). Leuco dyes are described in WO2018/085315 (Procter and Gamble).

Dyes are organic molecules that have an absorption coefficient of greater than 4000, preferably greater than 10 000 $mol^{-1}$ L $cm^{-1}$ at any wavelength in the range 400-700nm, preferably 540 to 640nm. Molar absorption coefficients are preferably measured in an organic solvent, preferably propan-2-ol, using a 1, 5 or 10 cm cell.

Leuco dyes

Leuco dyes are organic molecules that exhibit a change from a colorless or slightly colored state to a dye upon exposure to specific chemical or physical triggers, such as oxidation, reduction, protonation or deprotonation. The change in color depth is visually perceptible by the human eye. The triggered color change of leuco dyes results from a change in the molar extinction coefficient in the 400-750 nm range. The increase in the molar extinction coefficient upon the triggering should be bigger than 50 %, preferably bigger than 200% and even more preferably bigger than 500%. Such leuco dyes are described in the prior art, such as WO2018/085300, WO2018/085301, WO2018/085302, WO2018/085303, WO2018/085304, WO2018/085305, WO2018/085306, WO2018/085308, WO2018/085309, WO2018/085310, WO2018/085311, WO2018/085312, WO2018/085313, WO2018/085314, WO2018/085315.

Preferred leuco shading dyes are according to claim 5 of WO2018/085300, more preferably are according to claims 6 to 12 of WO2018/085302 wherein the more preferred leuco shading dyes are with the increasing claim number from claim 6 up to claim 12. The leuco shading dyes of claim 12 of WO2018/085302 thereby representing the most preferred leuco shading dyes. The subject matter of these claims of WO2018/085302 insofar as regarding the specified leuco shading dyes are considered to be repeated here.

Unless otherwise indicated, the term shading dye as used in this specification includes leuco dyes. However, preferably the shading dyes used in the invention are non-leuco shading dyes.

Shading dyes

The shading dyes (leuco- or non-leuco shading dyes) used in the present invention provide a shade to white fabric and preferably provide a blue or violet shade to white fabric. In this regard the shading dye gives a blue or violet color to a white cloth with a hue angle of 240 to 330, more preferably 260 to 320, most preferably 265 to 300. The white cloth used is bleached non-mercerised woven cotton sheeting. Preferably a 10 cm by 10 cm piece of white bleached non-mercerised woven cotton cloth is agitated in an aqueous solution (6° French Hard water, liquor 298K: cloth 30:1) 2g/L of a base detergent (10 wt. % linear alkyl benzene sulfonate, 5 wt.% primary alcohol ethoxylate (C12-15, with 7 moles of ethoxy groups), pH=8) for 30 minutes at room temperature. The cloths are removed rinsed and tumble dried. The experiment is repeated with and without the addition of shading dye. The color of the cloth is measured using a reflectometer and expressed as the CIE L*a*b* values. The experiment was repeated with the addition of 0.001 wt. %

of the dye to the formulation.

The total color added to the cloth was calculated as the ΔE value, such that

$$\Delta E = (\Delta L^2 + \Delta a^2 + \Delta b^2)^{0.5}$$

where ΔL = L(control)-L(dye); Δa = a(control)-a(dye); Δb = b(control)-b(dye)

The actual color of the cloth was calculated as the hue angle, which for the current range of colors is given by

$$\text{Hue angle} = 270+180/\pi \times \text{atan}(-\Delta a/\Delta b)$$

A hue angle of 360/0 is red, 270 is blue and 180 is green.

The dye according to the invention is a shading dye which means it is able to deposit onto textile during domestic wash conditions in the presence of a wash liquor comprising surfactant. This may be assessed using the above test, where a shading dye will give a non-zero ΔE value.

The shading dye is covalently bound to at least one alkoxy-$CH=CH_2$ or -$CH=CH_2$ capped polyalkoxy group. The shading dye may be covalently bound to multiple such groups of the same type or a to a mixture of different such groups.

Preferably the shading dye used in the invention is covalently bound to one or two - alkoxy-$CH=CH_2$ or -$CH=CH_2$ capped polyalkoxy groups and more preferably is covalently bound to one alkoxy-$CH=CH_2$ or -$CH=CH_2$ capped polyalkoxy group.

Most preferred groups are those adhering to the following formula: - $([CH_2]mO)nCH=CH_2$ where n is from 1 to 20 and wherein m is from 2 to 4. Preferably m is 2 or 3 and more preferably m is 2. Preferably n is from 1 to 10 and more preferably n is from 2 to 5.

Preferably the shading is bound to at least one $-(CH_2CH_2O)_nCH=CH_2$ group, wherein n is from 1 to 20. In this sense the (poly)alkoxy moiety if present is preferably a (poly)ethoxy moiety. Advantageously n is from 1 to 10 and more preferably is from 2 to 5.

In case of a mixture of different (poly)alkoxylate lengths, 'n' refers to the molar average alkoxylate length.

Preferably the shading dye is covalently bound to at least one alkoxy-$CH=CH_2$ or-$CH=CH_2$ capped polyalkoxy group via a heteroatom, wherein the heteroatom more preferably is O or N and wherein the heteroatom even more preferably is N.

The non-leuco shading dye preferably contains a chromophore selected from the following chromophore classes: anthraquinone, azo, oxazine, azine, triphenodioxazine, triphenyl methane, xanthene and phthalocyanin, more preferably azo and anthraquinone most preferably mono-azo or bis-azo.

Preferably the non-leuco shading dye chromophore is a mono-azo or bis-azo dye, and even more preferably is a mono-azo dye.

A highly preferred non-leuco mono azo dye is of the structure (I):

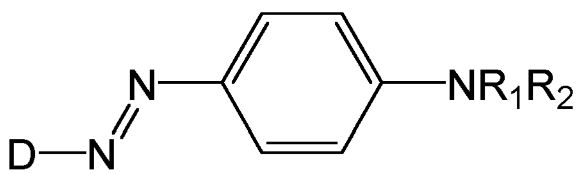

Wherein D denotes an aromatic of heteroaromatic group. Preferably D is selected from the group consisting of: azothiophenes, azobenzothiazoles and azopyridones. The aromatic rings may be further substituted, for example and preferably by a methyl group. Most preferably the dye is an azo thiophene.

More preferred non-leuco mono-azo dyes are of the structure (II):

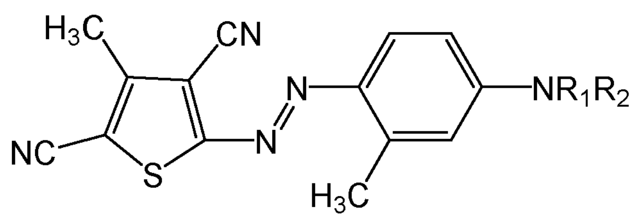

In structure (I) and (II) at least one of $R_1$ and $R_2$ represents an alkoxy-$CH=CH_2$ or - $CH=CH_2$ capped polyalkoxy group. In structure (I) and (II) preferably one of $R_1$ and $R_2$ represents an alkoxy-$CH=CH_2$ or -$CH=CH_2$ capped polyalkoxy group; and the remaining one of $R_1$ and $R_2$ represents -H, -alkoxy or -polyalkoxy and more preferably represents -ethoxy or -polyethoxy.

Even further preferred non-leuco mono-azo dyes of structure (III):

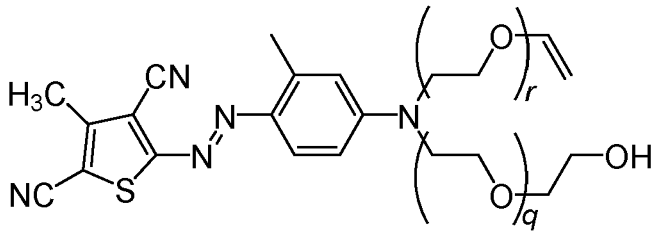

wherein *r*+ *q* is from 1 to 10, preferably is from 2 to 5 and even more preferably r= 1 and q = 1. *r* is at least 1.

Preferred non-leuco bis-azo dyes are of structure (IV):

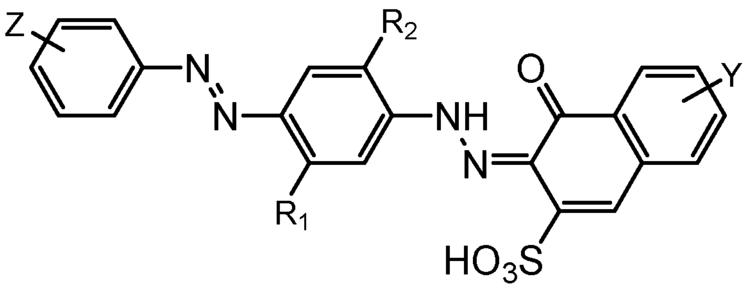

wherein:

$R_1$ and $R_2$ are independently H, alkyl, alkoxy, alkyleneoxy, alkyl capped alkyleneoxy, polyalkyleneoxy, alkyl capped polyalkyleneoxy, urea, amido or acetamido;

Z is an oxygen, nitrogen or sulfonamido group further substituted with at least one, and preferably one, alkoxy-$CH=CH_2$ or -$CH=CH_2$ capped polyalkoxy group;

Y is a substituted or unsubstituted amino group.

More preferred non-leuco bis-azo dyes are of the structure (V):

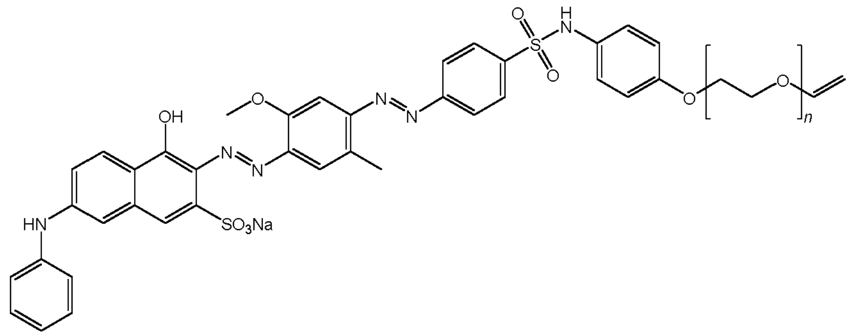

wherein n is from 1 to 10.

The structures (IV) and (V) describe bis-azo dyes structures wherein one of the azo groups is depicted in the hydrazone form. These structures are to be interpreted as also covering the bis-azo dyes wherein both azo groups are in the -N=N- from. Preferably one of the azo groups is in the hydrazone form, and one in the azo form when dissolved in water. Azo-hydrazone tautomerism is discussed in Organic Chemistry in Colour by P.F. Gordon and P. Gregory (Springer-Verlag 1983). Azo and hydrazone forms are illustrated below for the dye Direct Violet 9:

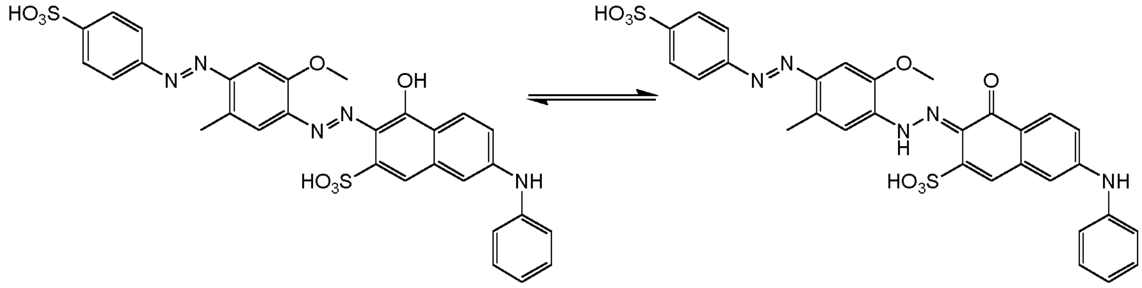

Azo Hydrazone

The non-leuco bis-azo dyes may be present as the salt of an alkali metal, alkaline earth metal or a quaternary amine most preferably the counterion is the sodium salt. The structures (IV) and (V) are also to be interpreted as covering such salt forms and the free-acid forms.

**Manufacture of the blue or violet azo dyes**

The preferred bis-azo dyes may be synthesised via well-known azo coupling reactions, for example

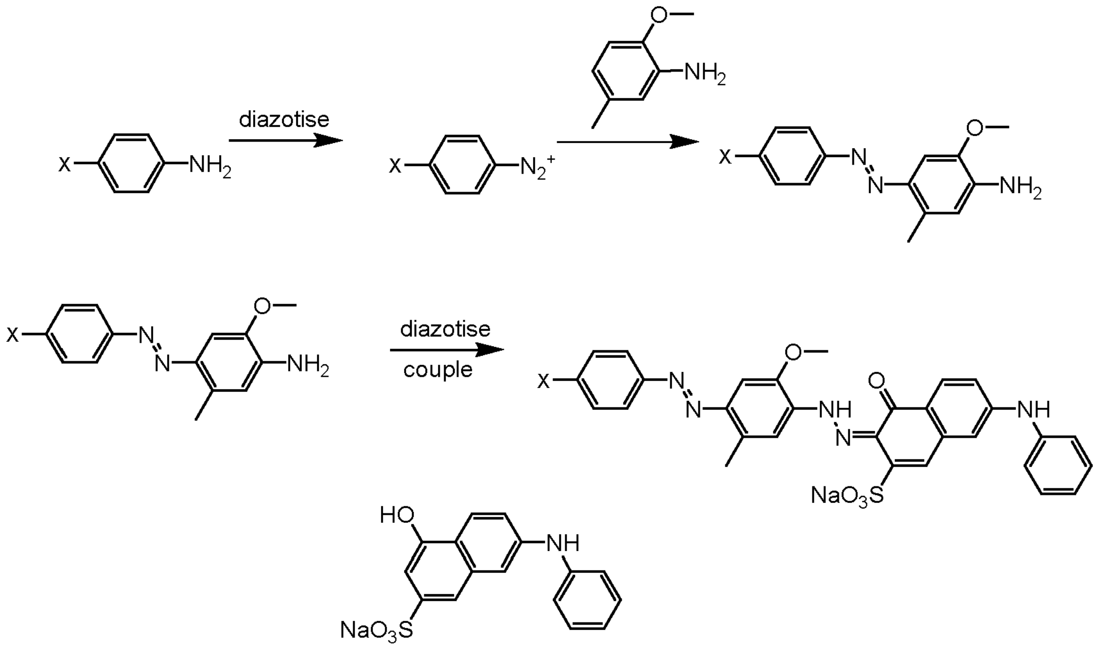


Where

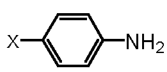 is 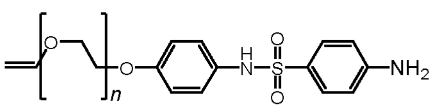

Synthesis of a plurality of bis-azo dyes having at least one polyalkoxy chain, which are end-terminated by a $-CH=CH_2$ group is described in WO2012/054058, although such dyes also contain further -COOH groups.
Synthesis of mono-azo thiophene dyes are described in US4912203 and WO2011/017719. The central coupling reaction is:

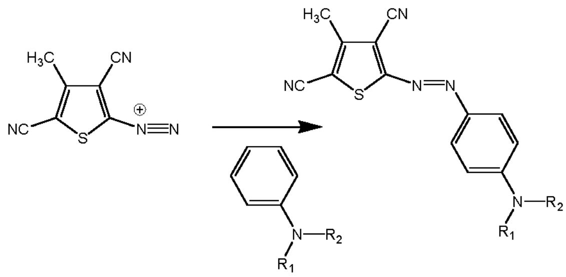

Where at least of $R_1$ and $R_2$ represents an alkoxy-CH=$CH_2$ or -CH=$CH_2$ capped polyalkoxy group.

The -CH=$CH_2$ moiety may be obtained by dehydration of the corresponding ethoxylated material as illustrated below:

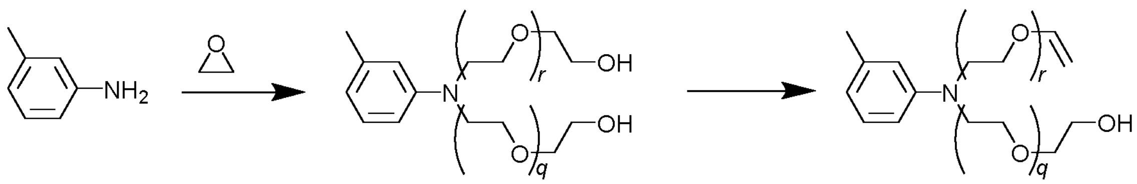

and

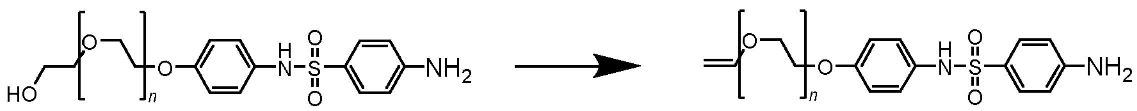

Dehydration of the terminal alcohol group may be achieved by heating in the presence of strong acid, such as sulfuric or phosphoric acid, then purifying.

Additional advantages of the inventive shading dyes are that the double bond is more active to radical addition, and the dyes have better deposition profiles to fabrics.

## Surfactant

The laundry detergent composition of the invention comprises from 2 to 70 wt. % of a surfactant, most preferably 10 to 30 wt. %. In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the surfactants used are saturated.

Suitable nonionic surfactants may include, in particular, the reaction products of compounds having a hydrophobic group and a reactive hydrogen atom, for example, aliphatic alcohols, acids, amides with alkylene oxides, especially ethylene oxide either alone or with propylene oxide. Specific nonionic surfactants are the condensation products of aliphatic $C_8$ to $C_{18}$ primary or secondary linear or branched alcohols with ethylene oxide, generally 5 to 40 EO, preferably 7EO to 9EO.

Suitable anionic surfactants which may be used are usually water-soluble alkali metal salts of organic sulfates and sulphonates having alkyl radicals containing from about 8 to about 22 carbon atoms, the term alkyl being used to include the alkyl portion of higher acyl radicals. Examples of suitable synthetic anionic surfactants are sodium and potassium alkyl sulfates, especially those obtained by sulphating higher $C_8$ to $C_{18}$ alcohols, produced for example from tallow or coconut oil, sodium and potassium alkyl $C_9$ to $C_{20}$ benzene sulphonates, particularly sodium linear secondary alkyl $C_{10}$ to $C_{15}$ benzene sulphonates; and sodium alkyl glyceryl ether sulfates, especially those ethers of the higher alcohols derived from tallow or coconut oil and synthetic alcohols derived from petroleum. The preferred anionic surfactants are sodium $C_{11}$ to $C_{15}$ alkyl benzene sulphonates and sodium $C_{12}$ to $C_{18}$ alkyl sulfates. Highly preferred are anionic alkyl benzene sulfonates, which more advantageously are linear alkyl benzene sulphonates. Also applicable are surfactants such as those described in EP-A-328 177 (Unilever), which show resistance to salting-out, the alkyl polyglycoside surfactants described in EP-A-070 074, and alkyl monoglycosides.

Preferred surfactant systems are mixtures of anionic and nonionic surfactants, in particular the groups and

examples of anionic and nonionic surfactants pointed out in EP-A-346 995 (Unilever). Especially preferred is surfactant system that is a mixture of an alkali metal salt of a $C_{16}$ to $C_{18}$ primary alcohol sulfate together with a $C_{12}$ to $C_{15}$ primary alcohol 3 to 7 EO ethoxylate.

The nonionic surfactant is preferably present in amounts of less than 50 wt. %, most preferably of less than 20 wt. % based on the total weight of the surfactant system. Anionic surfactants can be present for example in amounts in the range from 50 to 100 wt. % based on the total weight of the surfactant system. Thus a highly advantageous surfactant comprises 50 to 100 wt. % of linear alkyl benzene sulfonates, based on the total weight of surfactants.

**Builders or Complexing Agents**

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetra-acetic acid.

Examples of precipitating builder materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The laundry detergent composition of the invention may also contain 0-65 wt. % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilizing agents by virtue of their ability to complex metal ions.

Zeolite and carbonate (carbonate (including bicarbonate and sesquicarbonate) are preferred builders, whereof carbonate is the more preferred.

The composition may contain as builder a crystalline aluminosilicate, preferably an alkali metal aluminosilicate, more preferably a sodium aluminosilicate. This is typically present at a level of less than 15 wt. %. Aluminosilicates are materials having the general formula:

$$0.8\text{-}1.5\ M_2O.\ Al_2O_3.\ 0.8\text{-}6\ SiO_2$$

where M is a monovalent cation, preferably sodium. These materials contain some bound water and are required to have a calcium ion exchange capacity of at least 50 mg CaO/g. The preferred sodium aluminosilicates contain 1.5-3.5 $SiO_2$ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).

Preferably the laundry detergent composition is a non-phosphate built laundry detergent formulation, i.e., contains less than 1 wt. % of phosphate. Preferably the laundry detergent composition is carbonate built.

**Fluorescent Agent**

The laundry detergent composition of the invention preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the laundry detergent composition of the invention is generally from 0.005 to 2 wt. %, more preferably 0.01 to 0.1 wt. %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

It is preferred that the laundry detergent composition according to the invention comprises a fluorescer. Likewise, it is preferred that the aqueous solution used in the domestic method of treating a textile comprises a fluorescer. When a fluorescer is present in said aqueous solution, it is preferably in the range from 0.0001 g/l to 0.1 g/l, preferably 0.001 to 0.02 g/l.

The laundry detergent composition may comprise a mixture of different shading dyes according to the invention

as well as a mixture of shading dyes according to the invention and further shading dyes not according to the invention.

## Perfume

Preferably the laundry detergent composition comprises a perfume. The perfume is preferably in the range from 0.001 to 3 wt. %, most preferably 0.1 to 1 wt. %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a laundry formulation. In the laundry detergent compositions of the present invention it is envisaged that there will be four or more, preferably five or more, more preferably six or more or even seven or more different perfume components.

In perfume mixtures preferably 15 to 25 wt. % are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol. Perfume and top note are advantageously used to cue the whiteness benefit provided by the laundry detergent composition of the invention.

It is preferred that the laundry detergent composition of the invention does not contain a peroxygen bleach, e.g., sodium percarbonate, sodium perborate, and peracid.

## Polymers

The laundry detergent composition of the invention may comprise one or more further polymers. Examples are carboxymethylcellulose, poly (ethylene glycol), poly(vinyl alcohol), polycarboxylates such as polyacrylates, maleic/acrylic acid copolymers and lauryl methacrylate/acrylic acid copolymers.

Polymers present to prevent dye deposition, for example poly(vinylpyrrolidone), poly(vinylpyridine-N-oxide), and poly(vinylimidazole), are preferably absent from the formulation.

## Enzymes

One or more enzymes are preferably present in a laundry detergent composition of the invention and when practicing the method of the invention.

Preferably the level of each enzyme in the laundry detergent composition of the invention is from 0.0001 wt. % to 0.1 wt. % protein.

Especially contemplated enzymes include proteases, alpha-amylases, cellulases, lipases, peroxidases/oxidases, pectate lyases, and mannanases, or mixtures thereof.

Suitable lipases include those of bacterial or fungal origin. Chemically modified or protein engineered mutants are included. Examples of useful lipases include lipases from *Humicola* (synonym *Thermomyces*), e.g. from *H. lanuginosa* (*T. lanuginosus*) as described in EP 258 068 and EP 305 216 or from *H. insolens* as described in WO 96/13580, a *Pseudomonas* lipase, e.g. from *P. alcaligenes* or *P. pseudoalcaligenes* (EP 218 272), *P. cepacia* (EP 331 376), *P. stutzeri* (GB 1,372,034), *P. fluorescens, Pseudomonas* sp. strain SD 705 (WO 95/06720 and WO 96/27002), *P. wisconsinensis* (WO 96/12012), a *Bacillus* lipase, e.g. from *B. subtilis* (Dartois et al. (1993), Biochemica et Biophysica Acta, 1131, 253-360), *B. stearothermophilus* (JP 64/744992) or *B. pumilus* (WO 91/16422).

Other examples are lipase variants such as those described in WO 92/05249, WO 94/01541, EP 407 225, EP 260 105, WO 95/35381, WO 96/00292, WO 95/30744, WO 94/25578, WO 95/14783, WO 95/22615, WO 97/04079 and WO 97/07202, WO 00/60063.

Preferred commercially available lipase enzymes include Lipolase™ and Lipolase Ultra™, Lipex™ and lipoclean ™ (Novozymes A/S).

Preferred phospholipases are classified as EC 3.1.1.4 and/or EC 3.1.1.32. As used herein, the term phospholipase is an enzyme which has activity towards phospholipids.

Phospholipids, such as lecithin or phosphatidylcholine, consist of glycerol esterified with two fatty acids in an outer (sn-1) and the middle (sn-2) positions and esterified with phosphoric acid in the third position; the phosphoric acid, in turn, may be esterified to an amino-alcohol. Phospholipases are enzymes which participate in the hydrolysis of phospholipids. Several types of phospholipase activity can be distinguished, including phospholipases $A_1$ and $A_2$ which hydrolyze one fatty acyl group (in the sn-1 and sn-2 position, respectively) to form lysophospholipid; and lysophospholipase (or phospholipase B) which can hydrolyze the remaining fatty acyl group in lysophospholipid. Phospholipase C and phospholipase D (phosphodiesterases) release diacyl glycerol or phosphatidic acid respectively.

Enzyme and photobleach may show some interaction and should be chosen such that this interaction is not negative. Some negative interactions may be avoided by encapsulation of one or other of enzyme or photobleach and/or other segregation within the product.

Suitable proteases include those of animal, vegetable or microbial origin. Microbial origin is preferred. Chemically modified or protein engineered mutants are included. The protease may be a serine protease or a metallo protease, preferably an alkaline microbial protease or a trypsin-like protease. Preferred commercially available protease enzymes include Alcalase™, Savinase™, Primase™, Duralase™, Dyrazym™, Esperase™, Everlase™, Polarzyme™, and Kannase™, (Novozymes A/S), Maxatase™, Maxacal™, Maxapem™, Properase™, Purafect™, Purafect OxP™, FN2™, and FN3™ (Genencor International Inc.).

Preferred cutinases are classified in EC 3.1.1.74. The cutinase may be of any origin. Preferably cutinases are of microbial origin, in particular of bacterial, of fungal or of yeast origin.

Suitable amylases (alpha and/or beta) include those of bacterial or fungal origin. Chemically modified or protein engineered mutants are included. Amylases include, for example, alpha-amylases obtained from *Bacillus,* e.g. a special strain of *B. licheniformis,* described in more detail in GB 1,296,839, or the *Bacillus* sp. strains disclosed in WO 95/026397 or WO 00/060060. Commercially available amylases are Duramyl™, Termamyl™, Termamyl Ultra™, Natalase™, Stainzyme™, Fungamyl™ and BAN™ (Novozymes A/S), Rapidase™ and Purastar™ (from Genencor International Inc.).

Suitable cellulases include those of bacterial or fungal origin. Chemically modified or protein engineered mutants are included. Suitable cellulases include cellulases from the genera *Bacillus, Pseudomonas, Humicola, Fusarium, Thielavia, Acremonium,* e.g. the fungal cellulases produced from *Humicola insolens, Thielavia terrestris, Myceliophthora thermophila,* and *Fusarium oxysporum* disclosed in US 4,435,307, US 5,648,263, US 5,691,178, US 5,776,757, WO 89/09259, WO 96/029397, and WO 98/012307. Commercially available cellulases include Celluzyme™, Carezyme™, Celluclean ™, Endolase™, Renozyme™ (Novozymes A/S), Clazinase™ and Puradax HA™ (Genencor International Inc.), and KAC-500(B)™ (Kao Corporation).

Suitable peroxidases/oxidases include those of plant, bacterial or fungal origin. Chemically modified or protein engineered mutants are included. Examples of useful peroxidases include peroxidases from *Coprinus,* e.g. from *C. cinereus,* and variants thereof as those described in WO 93/24618, WO 95/10602, and WO 98/15257. Commercially available peroxidases include Guardzyme™ and Novozym™ 51004 (Novozymes A/S).

Further enzymes suitable for use are discussed in WO2009/087524, WO2009/090576, WO2009/107091, WO2009/111258 and WO2009/148983.

Preferred enzymes are proteases, lipases, amylase and cellulases, most advantageously a serine protease is comprised by the laundry detergent composition of the invention.

## Enzyme Stabilizers

Any enzyme present in the composition may be stabilized using conventional stabilizing agents, e.g., a polyol such as propylene glycol or glycerol, a sugar or sugar alcohol, lactic acid, boric acid, or a boric acid derivative, e.g., an aromatic borate ester, or a phenyl boronic acid derivative such as 4-formylphenyl boronic acid, and the composition may be formulated as described in e.g. WO 92/19709 and WO 92/19708.

Where alkyl groups are sufficiently long to form branched or cyclic chains, the alkyl groups encompass branched, cyclic and linear alkyl chains. The alkyl groups are preferably linear or branched, most preferably linear.

## Form of the laundry detergent composition

The laundry detergent composition of the invention may be a liquid or powder.

To reduce coloring the powder as a whole by the shading dye, the shading dye of the invention is advantageously present in post-dosed granules, which contain less than 5 wt. % of the shading dye. It was further found that limiting the amount of the shading dye of the invention in the post-dose dye granules to at most 5 wt. % reduces spotting upon neat application of the product (e.g. as powder on wet textile). Preferably a further non-shading dye is added to the post-dose granule to give the granule a blue colour.

Preferably the total amount of shading dye comprised by the post-dose dye granule is from 0.1 to 2 wt. %, based on the total weight of the post-dose dye granule.

The shading dye may be pre-mixed with a water-soluble salt (such as sodium sulfate) to form a post-dose dye granule. The post-dose dye granules can be made by known techniques in the art, such as granulation, fluid-bed agglomeration and the like. The post-dose dye granules of the invention can be subsequently mixed with the based detergent granules.

The size of the post-dose dye granule may be in the range of 50 to 3000 $\mu$m. It is most preferred that the granule has a particle size in the range of 100 to 2000 $\mu$m, most preferably 180 $\mu$m to 1000 $\mu$m. The size as given is the maximum length in any one direction of the granule such that the granule passes through a standard sieve of the requisite size.

In case the laundry detergent composition is a powder, the composition preferably comprises a combination of linear alkyl benzene sulfonates, carbonate and sodium sulfate and post-dosed dye granules, wherein the post-dose

dye granules comprise the shading dye according to the invention.

In case the laundry detergent composition is in the form of a bottled liquid detergent product, the bottle preferably is a 1 to 5 L bottle with a resealable screw top where the maximum dimension of the pouring neck of the bottle is at least 3 times smaller than the maximum dimension of the bottle. On initial sale the bottle should be filled to greater than 95% of the bottle capacity by weight. Surprisingly this reduces the oxidation of the shading dye used in the invention in the formulation during storage.

In case the laundry detergent composition is in the form of a unit dose, it preferably is a liquid unit dose product. Advantageously unit dose laundry detergent products are contained in a re-closable plastic box. The re-closable plastic box is highly advantageously a child resistance packaging. The requirement for child resistance packaging is given in ISO 8317. Surprisingly providing the laundry detergent composition according to the invention in liquid unit dose form, especially when contained in a re-closable plastic box conforming to the requirements of child resistance packaging can reduce the oxidation of the shading dye in the formulation during storage.

Unless otherwise indicated, preferred aspects in the context of one aspect of the invention (e.g. the laundry detergent composition) are also applicable as preferred aspects in the context of one of the other aspects, (e.g. the laundry detergent composition as used in the domestic method of treating a textile) *mutatis mutandis.*

The invention is now illustrated by the following non-limiting examples.

## Examples

Example 1

A liquid laundry detergent can be prepared of the following formulation:

| Ingredient | Weight% |
|---|---|
| Linear alkyl benzene sulfonate | 10 |
| primary alcohol ethoxylate (C12-15, with 7 moles of ethoxy groups) | 5 |
| remainder | water (pH=8 using triethanolamine) |

The liquid laundry detergent comprises 0.001 wt. % shading dye according to the following structure (Example 1, according to the invention):

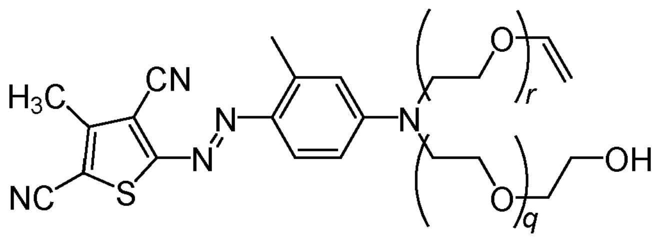

with r = 1 and q is 1 (i.e. r + q = 2) (Example 1). As comparative (not according to the invention) 0.001 wt.% of a shading dye can be used of the following structure:

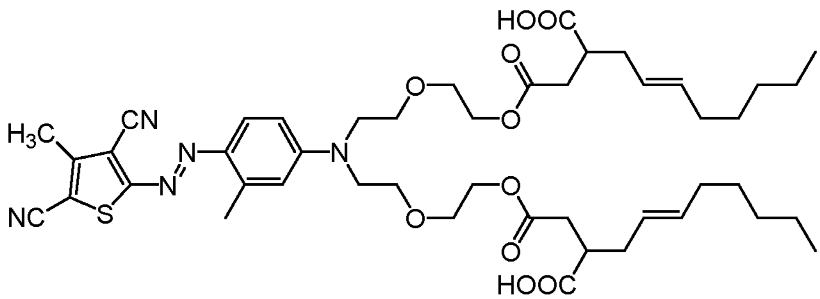

(Comparative A, not according to the invention). As a reference the liquid laundry detergent composition is

used but without any added shading dye (reference liquid).

The wash liquor is prepared by dosing 4g/L of the liquid laundry detergent into 13°FH water in tergotometer pots and a 10 by 10 cm piece of woven cotton, knitted cotton, 65/35 polycotton, microfiber polyester or 80/20 nylon-elastane textile is added so that the wash liquor to textile ratio is 100:1. The wash solution is agitated at 200 rpm for 1 hour at room temperature, the textile rinsed in 13°FH water and dried.

The colour of the textile is measured using a reflectometer and expressed as CIE L*a*b*. The colour change of the textile washed using either the laundry detergent powder according to Example 1 or according to Comparative A is expressed relative to that of the textile washed using the reference liquid. The following expression is used: $\Delta b$ = b(reference) - b(dye). The relative deposition of the dye according to Example 1 or according to Comparative A can thus be compared.

Example 2

A powdered laundry detergent formulation can be prepared of the following formulation:

| Ingredient | Weight% |
|---|---|
| Linear alkyl benzene sulfonate | 14.5 |
| Sodium carbonate | 20.0 |
| Sodium sulphate | 50.0 |
| Sodium silicate | 6.0 |
| zeolite | 2.5 |
| Salt speckle granules (blue and red) | 1.8 |
| perfume | 0.3 |
| Sodium carboxymethylcellulose | 0.1 |
| Sokalan CP5 (ex BASF) | 0.1 |
| Shading dye granule | 0.3 |
| Minors (including fluorescer) and moisture | to 100% |

The shading dye granule is as described in WO2006/053598, and the formulation contains 0.0004wt% shading dye. The shading dye is according to the following structure (i.e. Example 2, according to the invention)

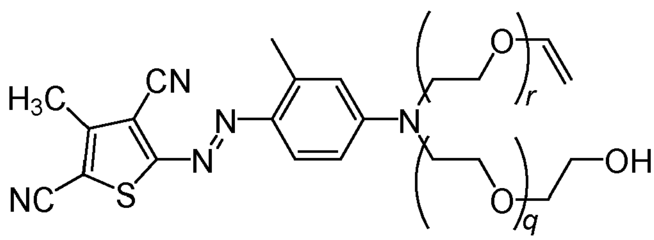

with r = 1 and q is 1 (i.e. r + q = 2) (Example 2). As comparative (not according to the invention) 0.001 wt.% of a shading dye can be used of the following structure:

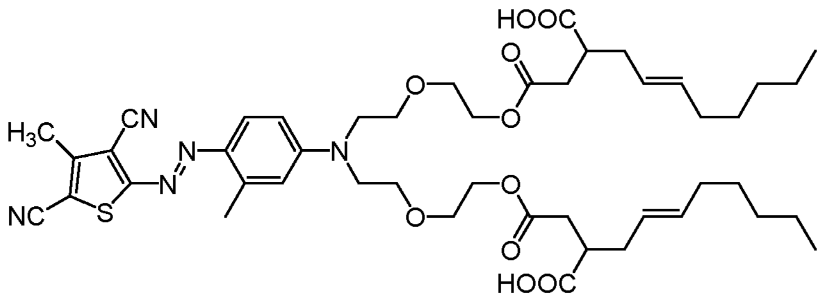

(Comparative B, not according to the invention). As a reference the powder laundry detergent composition is used but without any added shading dye (reference powder).

The wash liquor is prepared by dosing 4g/L of the laundry detergent powder into 13°FH water in tergotometer pots and a 10 by 10 cm piece of woven cotton, knitted cotton, 65/35 polycotton, microfiber polyester or 80/20 nylon-elastane textile is added so that the wash liquor to textile ratio is 100:1. The wash solution is agitated at 200 rpm for 1 hour at room temperature, the textile rinsed in 13°FH water and dried.

The colour of the textile is measured using a reflectometer and expressed as CIE L*a*b*. The colour change of the textile washed using either the laundry detergent powder according to Example 2 or according to Comparative B is expressed relative to that of the textile washed using the reference powder. The following expression is used: $\Delta b$ = b(reference) - b(dye). The relative deposition of the dye according to Example 2 or according to Comparative B can thus be compared.

Example 3

| | reference 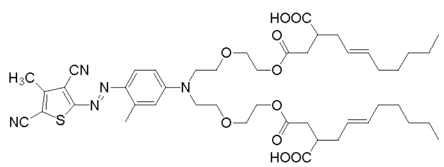 | inventive 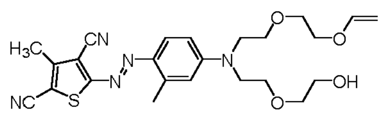 |
|---|---|---|
| pKa (pH 4 to 10) | 7.5 and 9.9 | None |
| *k(Methyl) $M^{-1}s^{-1}$* | $9\times10^2$ | $1\times10^4$ |
| *hydrolysis* | observed | not observed |

pKa values (acid dissociation constant) were measured for the reference dye by dissolving approximately $2\times10^{-5}$ mol $L^{-1}$ of the dye in water then varying the pH from 9.6 to 1.9 and observing the changes in the UV-VIS spectrum at 570nm. Fitting of the changes to the a dual $pK_a$ for the 2 -COOH groups gave the values shown in the table. The $pK_a$ values are higher than expected for a free -COOH group which would be 3 to 4 and is attributed to the effect of the alkyl chains. The inventive dye did not dissolve under analogous conditions and therefore potential $pK_a$ values were computed, (Chemicalize, Chemazon) no $pK_a$ value in the range 4 to 10 was found (strongest acidic $pK_a$ = 15.1, strongest basic $pK_a$ =1.0).

The value *k(Methyl)* is the solution addition rate constants for a methyl radical to the double bond, calculated according to Fischer H., and Radom, L. Angew. Chem. Int. Ed 2001, 40. 1340-1371.[($CH_2$=CH($OCH_2CH_3$) comparison to E-($CH_3$)HC=CH($CH_3$)].

The inventive compound is resistant to hydrolysis in the region of pH 4 to 10 and is more reactive to radical addition than the reference compound.

**Claims**

**1.** A laundry detergent composition comprising:

(i) from 2 to 70 wt. % of a surfactant; and

(ii) from 0.00001 to 0.1 wt. % of shading dye which is covalently bound to at least one alkoxy-$CH=CH_2$ or -$CH=CH_2$ capped polyalkoxy group.

**2.** A laundry detergent composition according to claim 1, wherein the shading dye provides a blue or violet shade to white fabric.

**3.** A laundry detergent composition according to claim 1 or claim 2, wherein the shading dye is covalently bound to one or two alkoxy-$CH=CH_2$ or -$CH=CH_2$ capped polyalkoxy groups and more preferably is covalently bound to one alkoxy-$CH=CH_2$ or -$CH=CH_2$ capped polyalkoxy group.

**4.** A laundry detergent composition according to any preceding claim, wherein the at least one group is according to the following formula:

$$-([CH_2]_mO)_nCH=CH_2,$$

wherein n is from 1 to 20 and wherein m is from 2 to 4, and wherein m preferably is from 2 to 3 and more preferably wherein m is 2.

**5.** A laundry detergent composition according to claim 4, wherein n is from 1 to 10 and preferably is from 2 to 5.

**6.** A laundry detergent composition according to any preceding claim, wherein the shading dye is bound to the group via a heteroatom, preferably wherein the heteroatom is O or N and more preferably wherein the heteroatom is N.

**7.** A laundry detergent composition according to any preceding claim, wherein the shading dye is a non-leuco blue or non-leuco violet shading dye.

**8.** A laundry detergent composition according to any preceding claim, wherein the shading dye chromophore is a mono-azo or bis-azo and preferably is a mono-azo.

**9.** A laundry detergent composition according to claim 8, wherein the bis-azo dye is a non-leuco shading dye of the following structure (IV):

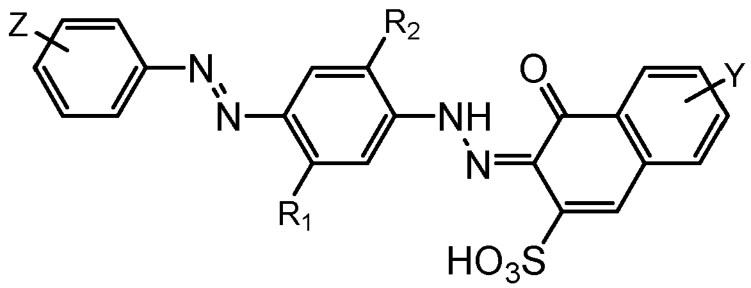

wherein:

$R_1$ and $R_2$ are independently H, alkyl, alkoxy, alkyleneoxy, alkyl capped alkyleneoxy, polyalkyleneoxy, alkyl capped polyalkyleneoxy, urea, amido or acetamido;

Z is an oxygen, nitrogen or sulfonamido group further substituted with an alkoxy-$CH=CH_2$ or -$CH=CH_2$ capped polyalkoxy group;

Y is a substituted or unsubsituted amino group.

**10.** A laundry detergent composition according to claim 8, wherein the non-leuco mono-azo dye is of the following structure (I):

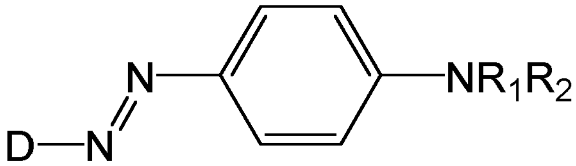

wherein D denotes an aromatic of heteroaromatic group; and wherein at least one of $R_1$ and $R_2$ represents an alkoxy-$CH=CH_2$ or -$CH=CH_2$ capped polyalkoxy group and preferably wherein one of $R_1$ and $R_2$ represents an alkoxy-$CH=CH_2$ or - $CH=CH_2$ capped polyalkoxy group; and the remaining one of $R_1$ and $R_2$ represents -H, -alkoxy or -polyalkoxy and more preferably represents -ethoxy or -polyethoxy.

**11.** A domestic method of treating a textile, the method comprising the steps of:

a. treating a textile with an aqueous solution of 0.5 to 20 g/L, more preferably 1 to 10 g/L of the laundry detergent composition according to any of the preceding claims;
b. optionally rinsing and drying the textile.

**12.** A blue or violet non-leuco shading dye shading of the following structure (II):

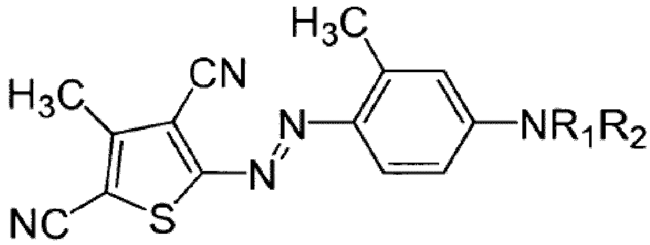

wherein at least of $R_1$ and $R_2$ represents an alkoxy-$CH=CH_2$ or -$CH=CH_2$ capped polyalkoxy group, preferably wherein one of $R_1$ and $R_2$ represents an alkoxy-$CH=CH_2$ or -$CH=CH_2$ capped polyalkoxy group; and the remaining one of $R_1$ and $R_2$ represents -H, -alkoxy or -polyalkoxy, more preferably -ethoxy or -polyethoxy.

**13.** A blue or violet non-leuco shading dye shading according to claim 12, wherein the shading dye is of the following structure (III):

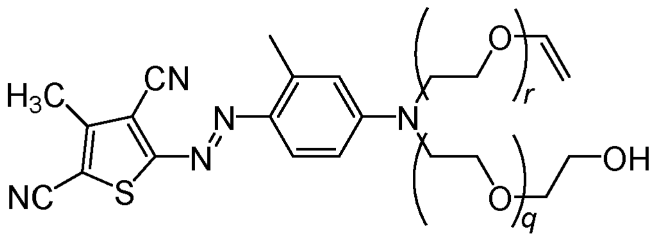

wherein $r$+ $q$ is from 1 to 10, preferably is from 2 to 5 and even more preferably $r$ = 1 and $q$ = 1; and wherein $r$ is at least 1.

**Patentansprüche**

**1.** Waschmittelzusammensetzung, umfassend:

(i) 2 bis 70 Gew.-% eines Tensids; und
(ii) 0,00001 bis 0,1 Gew.-% eines Nuancierfarbstoffs, der kovalent an mindestens eine Alkoxy-$CH=CH_2$- oder -$CH=CH_2$-verkappte Polyalkoxy-Gruppe gebunden ist.

**2.** Waschmittelzusammensetzung nach Anspruch 1, wobei der Nuancierfarbstoff weißem Textil einen blauen oder violetten Farbton verleiht.

**3.** Waschmittelzusammensetzung nach Anspruch 1 oder Anspruch 2, wobei der Nuancierfarbstoff kovalent an eine oder zwei Alkoxy-$CH=CH_2$- oder -$CH=CH_2$-verkappte Polyalkoxy-Gruppen und bevorzugter kovalent an eine Alkoxy-$CH=CH_2$- oder -$CH=CH_2$-verkappte Polyalkoxy-Gruppe gebunden ist.

**4.** Waschmittelzusammensetzung nach einem vorhergehenden Anspruch, wobei die mindestens eine Gruppe der folgenden Formel entspricht:

$$-([CH_2]_mO)_nCH=CH_2,$$

wobei n 1 bis 20 ist und wobei m 2 bis 4 ist und wobei m vorzugsweise 2 bis 3 und bevorzugter m 2 ist.

**5.** Waschmittelzusammensetzung nach Anspruch 4, wobei n 1 bis 10 und vorzugsweise 2 bis 5 ist.

**6.** Waschmittelzusammensetzung nach irgendeinem vorhergehenden Anspruch, wobei der Nuancierfarbstoff über ein Heteroatom an die Gruppe gebunden ist, wobei das Heteroatom vorzugsweise O oder N ist und bevorzugter das Heteroatom N ist.

**7.** Waschmittelzusammensetzung nach irgendeinem vorhergehenden Anspruch, wobei der Nuancierfarbstoff ein blauer Nicht-Leuko- oder ein violetter Nicht-Leuko-Nuancierfarbstoff ist.

**8.** Waschmittelzusammensetzung nach irgendeinem vorhergehenden Anspruch, wobei das Nuancierfarbstoff-Chromophor ein Monoazo oder Bisazo und vorzugsweise ein Monoazo ist.

**9.** Waschmittelzusammensetzung nach Anspruch 8, wobei der Bisazo-Farbstoff ein Nicht-Leuko-Nuancierfarbstoff der folgenden Struktur (IV) ist:

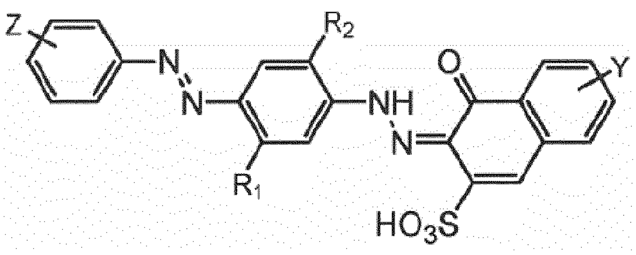
,

wobei:

$R_1$ und $R_2$, unabhängig voneinander, H, Alkyl, Alkoxy, Alkylenoxy, Alkyl-verkapptes Alkylenoxy, Polyalkylenoxy, Alkyl-verkapptes Polyalkylenoxy, Harnstoff, Amido oder Acetamido sind;
Z eine Sauerstoff-, Stickstoff- oder Sulfonamidogruppe ist, die ferner mit einer Alkoxy-$CH=CH_2$- oder -$CH=CH_2$-verkappten Polyalkoxy-Gruppe substituiert ist;
Y eine substituierte oder unsubstituierte Aminogruppe ist.

**10.** Waschmittelzusammensetzung nach Anspruch 8, wobei der Nicht-Leuko-Monoazofarbstoff die folgende Struktur (I) aufweist:

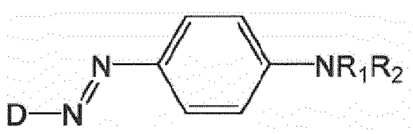
,

wobei D eine aromatische oder heteroaromatische Gruppe bedeutet und wobei mindestens einer von $R_1$ und $R_2$ eine Alkoxy-$CH=CH_2$- oder -$CH=CH_2$-verkappte Polyalkoxy-Gruppe darstellt und wobei vorzugsweise einer von $R_1$ und $R_2$ eine Alkoxy-$CH=CH_2$- oder -$CH=CH_2$-verkappte Polyalkoxy-Gruppe darstellt und der verbleibende eine von $R_1$ und $R_2$ -H, -Alkoxy oder -Polyalkoxy und bevorzugter - Ethoxy oder -Polyethoxy darstellt.

**11.** Häusliches Verfahren zur Behandlung eines Textils, wobei das Verfahren die Schritte umfasst:

a. Behandeln eines Textils mit einer wässrigen Lösung von 0,5 bis 20 g/l, bevorzugter 1 bis 10 g/l der Waschmittelzusammensetzung nach einem der vorhergehenden Ansprüche;
b. optional Spülen und Trocknen des Textils.

**12.** Blauer oder violetter abtönender Nicht-Leuko-Nuancierfarbstoff der folgenden Struktur (II):

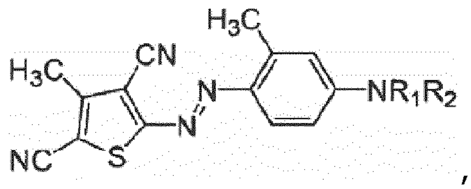
,

wobei mindestens einer von $R_1$ und $R_2$ eine Alkoxy-$CH=CH_2$- oder -$CH=CH_2$-verkappte Polyalkoxy-Gruppe darstellt, wobei vorzugsweise einer von $R_1$ und $R_2$ eine Alkoxy-$CH=CH_2$- oder -$CH=CH_2$-verkappte Polyalkoxy-Gruppe darstellt und der verbleibende eine von $R_1$ und $R_2$ -H, -Alkoxy oder -Polyalkoxy, bevorzugter - Ethoxy oder -Polyethoxy darstellt.

**13.** Blauer oder violetter abtönender Nicht-Leuko-Nuancierfarbstoff nach Anspruch 12, wobei der Nuancierfarbstoff die folgende Struktur (III) aufweist:

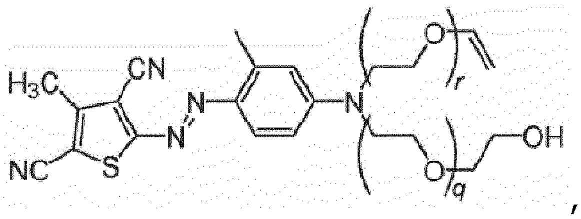
,

wobei r + q 1 bis 10 beträgt, vorzugsweise 2 bis 5 und noch bevorzugter r = 1 und q = 1 ist und wobei r mindestens 1 ist.

## Revendications

**1.** Composition de détergent de lessive comprenant :

(i) de 2 à 70 % en masse d'un tensioactif ; et
(ii) de 0,00001 à 0,1 % en masse de colorant d'ombrage qui est lié de manière covalente à au moins un groupe polyalcoxy coiffé par un alcoxy-$CH=CH_2$ ou -$CH=CH_2$.

**2.** Composition de détergent de lessive selon la revendication 1, dans laquelle le colorant d'ombrage fournit un ombrage bleu ou violet à du textile blanc.

**3.** Composition de détergent de lessive selon la revendication 1 ou revendication 2, dans laquelle le colorant d'ombrage est lié de manière covalente à un ou deux groupes polyalcoxy alcoxy-$CH=CH_2$ ou -$CH=CH_2$ coiffés et encore mieux est lié de manière covalente à un groupe polyalcoxy coiffé par un alcoxy-$CH=CH_2$ ou -$CH=CH_2$.

**4.** Composition de détergent de lessive selon l'une quelconque des revendications précédentes, dans laquelle le au moins un groupe est selon la formule suivante :

$$-([CH_2]_mO)_nCH=CH_2,$$

dans laquelle n est de 1 à 20 et dans laquelle m est de 2 à 4, et dans laquelle m est de préférence de 2 à 3 et encore mieux dans laquelle m est égal à 2.

**5.** Composition de détergent de lessive selon la revendication 4, dans laquelle n est de 1 à 10 et de préférence est

de 2 à 5.

**6.** Composition de détergent de lessive selon l'une quelconque des revendications précédentes, dans laquelle le colorant d'ombrage est lié au groupe via un hétéroatome, de préférence dans laquelle l'hétéroatome est O ou N et encore mieux dans laquelle l'hétéroatome est N.

**7.** Composition de détergent de lessive selon l'une quelconque des revendications précédentes, dans laquelle le colorant d'ombrage est un colorant d'ombrage bleu non-leuco ou violet non-leuco.

**8.** Composition de détergent de lessive selon l'une quelconque des revendications précédentes, dans laquelle le chromophore de colorant d'ombrage est un mono-azo ou bis-azo et est de préférence un mono-azo.

**9.** Composition de détergent de lessive selon la revendication 8, dans laquelle le colorant bis-azo est un colorant d'ombrage non-leuco de la structure (IV) suivante :

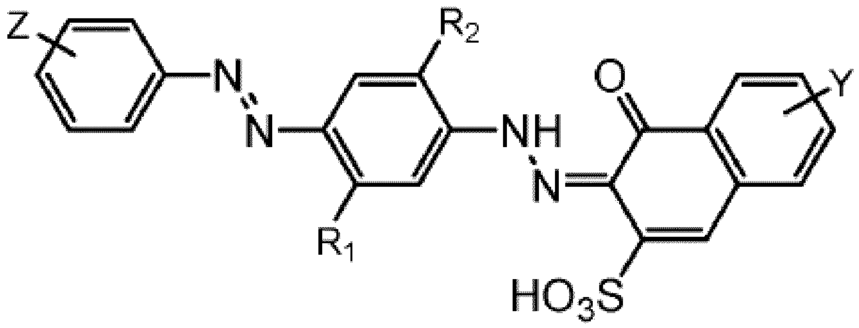

dans laquelle :

$R_1$ et $R_2$ sont indépendamment H, un groupe alkyle, alcoxy, alkylèneoxy, alkylèneoxy alkyle coiffé, polyalkylèneoxy, polyalkylèneoxy alkyle coiffé, urée, amido ou acétamido ;
Z est un oxygène, azote ou groupe sulfonamido de plus substitué avec un groupe polyalcoxy coiffé par un alcoxy-$CH=CH_2$ ou -$CH=CH_2$ ;
Y est un groupe amino substitué ou non substitué.

**10.** Composition de détergent de lessive selon la revendication 8, dans laquelle le colorant mono-azo non-leuco est de la structure (I) suivante :

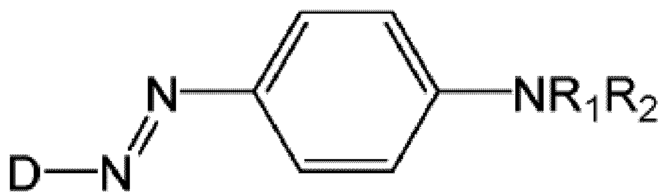

dans laquelle D indique un groupe aromatique ou hétéroaromatique ; et dans laquelle au moins un de $R_1$ et $R_2$ représente un groupe polyalcoxy coiffé par un alcoxy-$CH=CH_2$ ou -$CH=CH_2$ et de préférence dans laquelle un de $R_1$ et $R_2$ représente un groupe polyalcoxy coiffé par un alcoxy-$CH=CH_2$ ou -$CH=CH_2$ ; et le un de $R_1$ et $R_2$ restant représente -H, -alcoxy ou -polyalcoxy et représente encore mieux -éthoxy ou -polyéthoxy.

**11.** Procédé domestique de traitement d'un textile, le procédé comprenant les étapes de :

a. traitement d'un textile avec une solution aqueuse de 0,5 à 20 g/L, encore mieux de 1 à 10 g/L de la composition de détergent de lessive selon l'une quelconque des revendications précédentes ;
b. éventuellement rinçage et séchage du textile.

**12.** Formation d'ombrage par colorant d'ombrage non-leuco bleu ou violet de la structure (II) suivante :

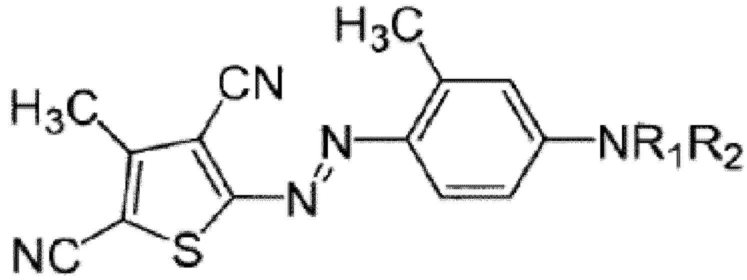

dans laquelle au moins un de $R_1$ et $R_2$ représente un groupe polyalcoxy coiffé par un alcoxy-$CH{=}CH_2$ ou -$CH{=}CH_2$, de préférence dans laquelle un de $R_1$ et $R_2$ représente un groupe polyalcoxy coiffé par un alcoxy-$CH{=}CH_2$ ou -$CH{=}CH_2$ ; et le un de $R_1$ et $R_2$ restant représente -H, -alcoxy ou -polyalcoxy, encore mieux -éthoxy ou -polyéthoxy.

**13.** Formation d'ombrage par un colorant d'ombrage non-leuco bleu ou violet selon la revendication 12, dans lequel le colorant d'ombrage est de la structure (III) suivante :

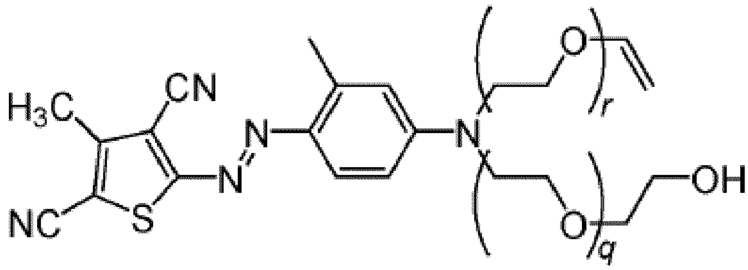

dans laquelle *r*+ *q* est de 1 à 10, de préférence est de 2 à 5 et encore mieux *r* = 1 et *q*= 1 ; et dans laquelle *r* est au moins 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012166768 A
- WO 2018085315 A
- WO 2018085300 A
- WO 2018085301 A
- WO 2018085302 A
- WO 2018085303 A
- WO 2018085304 A
- WO 2018085305 A
- WO 2018085306 A
- WO 2018085308 A
- WO 2018085309 A
- WO 2018085310 A
- WO 2018085311 A
- WO 2018085312 A
- WO 2018085313 A
- WO 2018085314 A
- WO 2012054058 A
- US 4912203 A
- WO 2011017719 A
- EP 328177 A, Unilever
- EP 346995 A, Unilever
- EP 0384070 A
- EP 258068 A
- EP 305216 A
- WO 9613580 A
- EP 218272 A
- EP 331376 A
- GB 1372034 A
- WO 9506720 A
- WO 9627002 A
- WO 9612012 A
- JP 64744992 B
- WO 9116422 A
- WO 9205249 A
- WO 9401541 A
- EP 407225 A
- EP 260105 A
- WO 9535381 A
- WO 9600292 A
- WO 9530744 A
- WO 9425578 A
- WO 9514783 A
- WO 9522615 A
- WO 9704079 A
- WO 9707202 A
- WO 0060063 A
- GB 1296839 A
- WO 95026397 A
- WO 00060060 A
- US 4435307 A
- US 5648263 A
- US 5691178 A
- US 5776757 A
- WO 8909259 A
- WO 96029397 A
- WO 98012307 A
- WO 9324618 A
- WO 9510602 A
- WO 9815257 A
- WO 2009087524 A
- WO 2009090576 A
- WO 2009107091 A
- WO 2009111258 A
- WO 2009148983 A
- WO 9219709 A
- WO 9219708 A
- WO 2006053598 A


### Non-patent literature cited in the description


- Dyes are described in Industrial Dyes. Wiley VCH, 2003
- **H.ZOLLINGER.** Color Chemistry. Wiley VCH, 2003
- **P.F. GORDON ; P. GREGORY.** Organic Chemistry in Colour. Springer-Verlag, 1983
- **SCHWARTZ ; PERRY.** Surface Active Agents. Interscience, 1949, vol. 1
- **SCHWARTZ ; PERRY ; BERCH.** Surface Active Agents. Interscience, 1958, vol. 2
- McCutcheon's Emulsifiers and Detergents. Manufacturing Confectioners Company
- **H. STACHE.** Tenside-Taschenbuch. Carl Hauser Verlag, 1981
- International Buyers Guide. CFTA Publications, 1992
- Chemicals Buyers Directory. Schnell Publishing Co, 1993
- **POUCHER.** *Journal of the Society of Cosmetic Chemists,* 1955, vol. 6 (2), 80

- **DARTOIS et al.** *Biochemica et Biophysica Acta,* 1993, vol. 1131, 253-360
- **FISCHER H. ; RADOM, L.** *Angew. Chem. Int. Ed,* 2001, vol. 40, 1340-1371